# EUROPÄISCHE PATENTSCHRIFT

(11) **EP 3 208 454 B1**
(45) Veröffentlichungstag und Bekanntmachung des Hinweises auf die Patenterteilung: **03.06.2020**
(21) Anmeldenummer: 16002339.6
(22) Anmeldetag: 03.11.2016
(51) Int. Cl.: F02F 7/00, F16J 15/326

(54) **KURBELWELLEN-DICHTFLANSCH**
CRANK SHAFT SEAL FLANGE
BRIDE ÉTANCHE DE VILEBREQUINS

(30) Priorität: 16.11.2015 DE 202015007951 U
(43) Veröffentlichungstag der Anmeldung: 23.08.2017
(73) Patentinhaber: KACO GmbH + Co. KG, 74912 Kirchardt (DE)
(72) Erfinder: Lenz, Roland, 74257 Untereisesheim (DE); Werner, André, 74211 Leingarten (DE); Bantel, Jochen, 74626 Bretzfeld (DE); Schöck, Joachim, 74321 Bietighem-Bissingen (DE)
(74) Vertreter: Kohl, Karl-Heinz

(56) Entgegenhaltungen:
- EP-A2- 1 063 455
- EP-A2- 1 780 549
- CN-U- 203 703 137
- FR-A1- 2 828 931

## Beschreibung

Die Erfindung betrifft einen Kurbelwellen-Dichtflansch nach dem Oberbegriff des Anspruches 1.

Kurbelwellen-Dichtflansche dienen zur Abdichtung von Kurbelwellen in Kraftfahrzeugen. Die Dichtflansche werden an die entsprechenden Kurbelgehäuse angeschraubt. Durch den Durchgang des Trägers des Dichtflansches verläuft die Kurbelwelle, an deren Umfang die dynamische Dichtung dichtend anliegt. Um die Drehzahl sowie die Position der Kurbelwelle zu erfassen, ist der Dichtflansch mit einem Sensor versehen, der mit einem drehfest auf der Kurbelwelle sitzenden Geberrad zusammenwirkt. Der Sensor ist eine gesonderte Baueinheit, die an den Träger angeschraubt wird. Damit der Sensor eine genaue Position einnimmt, ist am Träger eine radiale Führung für den Sensor vorgesehen, die sich in der einen Seitenfläche des Dichtflansches befindet und bis in die Innenwand des Trägers erstreckt. Ist der Sensor montiert, verbleibt zwischen ihm und der Seitenwand der Führung ein Spalt, der sich von der Innenwand des Trägers aus nach außen erstreckt.

Da der Sensor an den Träger angeschraubt wird, ist es aufwändig, den Sensor in eine exakte Position bezüglich des Dichtflansches bzw. des Trägers zu bringen, weil beim Anziehen der Schraube es sich nicht vermeiden lässt, dass sich die ohnehin toleranzbehaftete Position des Sensors radial, tangential sowie auch axial ändert. Auch ist die Sensoranbindung schwingungs- und erschütterungsempfindlich, wodurch die Messgenauigkeit beeinträchtigt werden kann. Zur Verbindung des Sensors mit dem Dichtflansch sind Verbindungselemente notwendig, die nicht nur die Herstellung des Dichtflansches verteuern, sondern auch zu einer umständlichen und aufwändigen Montage führen. Als Verbindungselemente sind die Schraube sowie die Zentrierbuchse am Sensor erforderlich. Am Dichtflansch muss ein Gewinde-Zentriereinsatz vorgesehen werden, in den die Schraube zur Befestigung des Sensors geschraubt wird.

Der radial verlaufende Spalt zwischen der Führungswand und dem Sensor führt dazu, dass sich in diesem Bereich mit der Zeit Ablagerungen bilden, die beim Einsatz des Dichtflansches unerwünscht sind. Außerdem kann über diesen radialen Spalt auch Schmutz von außen in den Dichtflansch eingetragen werden. Die Verbindungselemente führen dazu, dass der Sensorbereich eine gewisse Größe hat und dementsprechend einen großen Bauraum benötigt. Aufgrund des radialen Spaltes bilden sich im Einsatz des Dichtflansches Verwirbelungen im Bereich des Sensors, wodurch die Messgenauigkeit und die Dichtfunktion beeinträchtigt wird.

Ein Dichtflansch mit eingespritzten Sensor ist aus EP1063455 bekannt.

Ein Dichtflansch mit eingegossener Sensorleitung ist aus CN203703137U bekannt.

Der Erfindung liegt die Aufgabe zugrunde, den gattungsgemäßen Kurbelwellen-Dichtflansch so auszubilden, dass er bei einfacher und kostengünstiger Fertigung eine zuverlässige Messung des Sensors sowie eine zuverlässige Prüfung der Dichtheit des Dichtflansches ermöglicht.

Diese Aufgabe wird beim gattungsgemäßen Kurbelwellen-Dichtflansch erfindungsgemäß mit den kennzeichnenden Merkmalen des Anspruches 1 gelöst.

Beim erfindungsgemäßen Kurbelwellen-Dichtflansch ist der Sensor kein gesondertes Bauteil, das mittels Verbindungselementen am Dichtflansch montiert werden muss. Vielmehr ist der Sensor bzw. seine elektronische Baugruppe in den Kunststoff des Trägers integriert. Da die Baugruppe in den Kunststoff eingebettet ist, ist sie geschützt am Dichtflansch vorgesehen. Die elektronische Baugruppe und damit der Sensor können mit hoher radialer, tangentialer und axialer Genauigkeit am Dichtflansch vorgesehen werden. Die Integration des Sensors bzw. seiner elektronischen Baugruppe zeichnet sich durch eine sehr hohe Schwingungs- und Erschütterungsunempfindlichkeit aus, was zur hohen Messgenauigkeit beiträgt.

Da die elektronische Baugruppe in den Kunststoff integriert ist, müssen am Träger keine Führungen und dgl. vorgesehen sein, um eine Lagepositionierung des Sensors zu erreichen. Die erfindungsgemäße Ausbildung führt zu einer kompakten Gestaltung des Dichtflansches, der dadurch auch dann eingesetzt werden kann, wenn der vorhandene Einbauraum im jeweiligen Fahrzeug klein ist.

Erfindungsgemäß wird die elektronische Baugruppe bei der Herstellung des Dichtflansches durch Spritzgießen vorkonfektioniert in das Spritzgusswerkzeug eingelegt und anschließend der Kunststoff eingespritzt. Der dem Spritzgusswerkzeug zu entnehmende Dichtflansch weist somit bereits integriert die elektronische Baugruppe auf.

Da für die genaue Positionierung des Sensors keine Führung mehr erforderlich ist, kann der Durchgang des Trägers in vorteilhafter Weise einen umlaufend geschlossenen Wandabschnitt aufweisen, an den eine umlaufende, ebene Ringfläche in der einen Seitenfläche des Trägers anschließt. Dadurch entfallen beispielsweise radial verlaufende Spalte, die in die Innenwand des Durchganges münden. Dadurch werden auf einfache Weise Aufnahmeräume vermieden, in denen sich während des Einsatzes des Dichtflansches Ablagerungen bilden können. Darüber hinaus haben der geschlossene Wandabschnitt des Durchganges und die geschlossene Ringfläche insbesondere den Vorteil, dass eine Dichtheitsprüfung mittels einer Überdruckglocke zuverlässig und einfach möglich ist. Aufgrund der geschlossenen Flächen kann die Überdruckglocke dichtend so aufgesetzt werden, dass über den gesamten Umfang eine einwandfreie Abdichtung gegeben ist. Wird der Überdruck bei der Prüfung aufgebracht, dann tritt nicht mehr das Problem auf, dass die Luft unbeabsichtigt durch in die Innenwand des Durchganges mündende Spalte nach außen abgeführt werden kann. Wenn darum bei der Prüfung ein Druckabfall innerhalb der Messzeit auftritt, dann ist dies ein sicheres Anzeichen dafür, dass der Dichtflansch undicht ist.

Die elektronische Baugruppe ist innerhalb des Trägers so angeordnet, dass der Abstand von der Innenseite des Trägers so gering ist, dass der Sensor mit dem Geberrad auf der Kurbelwelle zusammenwirken kann. Die elektronische Baugruppe ist somit auch gegen die Innenwand des Trägers geschützt und abgedichtet.

Der Sensor weist vorteilhaft einen vom Träger abstehenden Buchsenteil auf, in den ein Stecker einer Sensorleitung gesteckt werden kann, mit der die Sensorsignale einer Steuereinrichtung, beispielsweise einer Motorsteuerung, zugeführt werden können.

Auch der Buchsenteil ist einstückig mit dem Träger ausgebildet und wird vorzugsweise beim Spritzgießen am Träger vorgesehen.

Vorteilhaft ragt die elektronische Baugruppe bis in einen Grundkörper, von dem der Buchsenteil absteht. Der Grundkörper ist massiv ausgebildet und schützt die elektronische Baugruppe zuverlässig.

Zum sicheren Schutz und zur sicheren Befestigung der elektronischen Baugruppe trägt in vorteilhafter Weise bei, wenn sich der Grundkörper zumindest annähernd über die axiale Breite des Trägers erstreckt.

Die dynamische Dichtung, mit welcher der Dichtflansch dichtend an der Kurbelwelle anliegt, kann aus geeigneten Kunststoffen, vorteilhaft aus Polyfluorcarbon, vorzugsweise aus Polytetrafluorethylen, bestehen. Dieser Werkstoff weist nur geringe Reibungswerte auf, so dass eine lange Einsatzdauer des Dichtflansches gewährleistet ist.

Die dynamische Dichtung kann aber auch aus elastomeren Werkstoffen, z. B. in Form einer flächig anliegenden Lippendichtung, oder in einer klassischen Dichtlippenausbildung (Dichtkante mit Federkraftunterstützung) bestehen.

Um eine statische Abdichtung des Dichtflansches am Kurbelgehäuse zu gewährleisten, ist es vorteilhaft, wenn der Träger an seiner dem Kurbelgehäuse zugewandten Seitenfläche wenigstens eine statische Dichtung aufweist. Mit ihr wird der Dichtflansch gegenüber dem Kurbelgehäuse zuverlässig abgedichtet.

Der Träger selbst besteht vorteilhaft aus Hochleistungs-Thermoplasten oder Duroplasten.

Als Hochleistungs-Thermoplaste kommen beispielsweise PPS, geeignete Polyamide oder PPA in Betracht. Als Duroplast sind vorteilhaft Phenolharze gut geeignet. Bei den Thermoplasten und Duroplasten handelt es sich jeweils um Compounds, d.h. sie weisen je nach Anwendungsfall beispielsweise Glas- oder Karbonfasern, mineralische Füllstoffe und dgl. auf.

Der Sensor kann seine Sensorsignale über Leitungen oder kabellos an eine Steuerung, vorzugsweise eine Motorsteuerung, übertragen.

Der Anmeldungsgegenstand ergibt sich nicht nur aus dem Gegenstand der einzelnen Ansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in perspektivischer Darstellung einen erfindungsgemäßen Kurbelwellen-Dichtflansch,
- Fig. 2: den erfindungsgemäßen Kurbelwellen-Dichtflansch in Vorderansicht,
- Fig. 3: in vergrößerter und perspektivischer Darstellung den Sensoreingang des erfindungsgemäßen Kurbelwellen-Dichtflansches (Pfeil III in Fig. 2).

Der Dichtflansch dient zur Abdichtung von PKW- und LKW-Kurbelwellen vorn und hinten. Die Dichtflansche werden in bekannter Weise an Gehäuse angeschraubt, in welchen die Kurbelwelle drehbar gelagert ist.

Der Dichtflansch hat einen ringförmigen Träger 1, der aus hartem Kunststoff besteht. Als Kunststoffe für den Träger 1 kommen beispielhaft Hochleistungs-Thermoplaste, wie PPS, geeignete Polyamide oder PPA, aber auch Duroplaste in Betracht, wie etwa Phenolharze. Die Hochleistungs-Thermoplaste sowie die Duroplaste sind jeweils Compounds, die je nach Einsatzfall Zusätze, wie Glas- oder Karbonfasern, mineralische Füllstoffe und dergleichen enthalten.

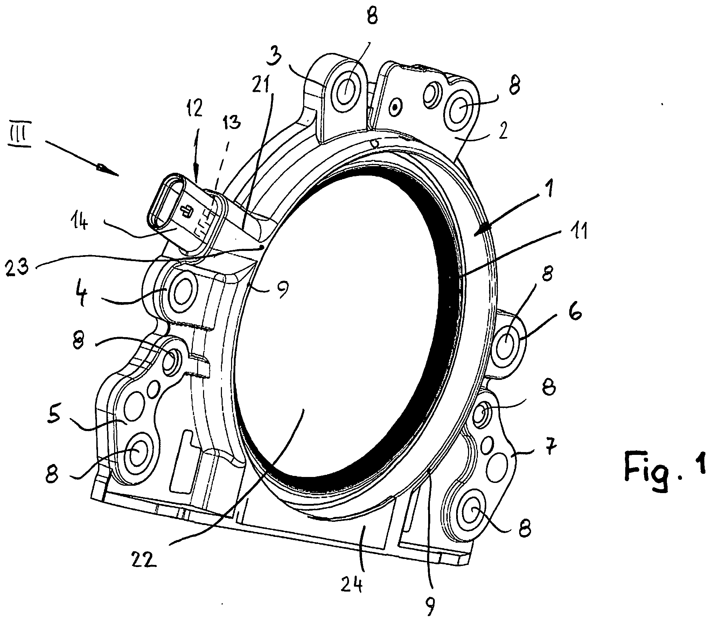

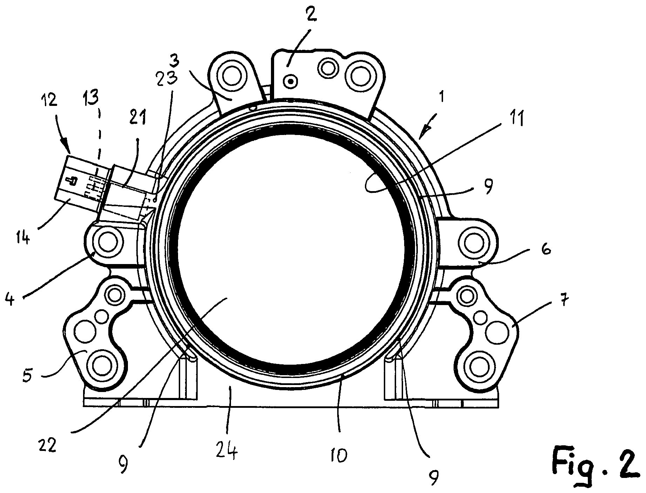

Vom Träger 1 stehen quer Befestigungspunkte 2 bis 7 ab, die jeweils mit wenigstens einer Durchtrittsöffnung 8 für Schrauben versehen sind, mit denen der Dichtflansch an das Kurbelgehäuse angeschraubt werden kann. Die Anordnung und Ausbildung der Befestigungspunkte 2 bis 7 richtet sich nach der Bauform des jeweiligen Kurbelgehäuses. Die in den Figuren 1 und 2 dargestellte Ausbildung und Anordnung der Befestigungslaschen 2 bis 7 ist darum nicht als beschränkend anzusehen, sondern stellt nur ein mögliches Ausführungsbeispiel dar.

An seiner dem Kurbelgehäuse zugewandten (nicht dargestellten) Seitenfläche ist der Dichtflansch bzw. der Träger 1 mit wenigstens einer statischen Dichtung versehen, die als Dichtring ausgebildet sein und über den Umfang des Trägers 1 verlaufen kann. Die statische Dichtung ist in einer Nut an der Stirnseite des Trägers 1 in bekannter Weise befestigt. Da solche statischen Dichtungen an Dichtflanschen für Kurbelwellen bekannt sind, wird ihre Ausbildung und Anordnung nicht näher beschrieben.

Der Träger 1 hat eine Durchgangsöffnung 22, in der in bekannter Weise eine dynamische Dichtung 11 angeordnet ist. Sie erstreckt sich über den Umfang der Durchgangsöffnung 22 und liegt dichtend an der Kurbelwelle an, die sich durch den Träger 1 erstreckt. Die dynamische Dichtung 11 kann eine Elastomerdichtung sein. Vorteilhaft besteht die dynamische Dichtung 11 aus Polyfluorcarbon, insbesondere aus Polytetrafluorethylen. Die dynamische Dichtung 11 besteht aus reibungsminimierten Werkstoffen, so dass der Verschleiß und die Reibungsverluste der dynamischen Dichtung 11 minimal ist und auf diese Weise eine lange Lebensdauer sichergestellt ist.

Die Durchgangsöffnung 22 weist am Übergang zu der in den Fig. 1 und 2 dargestellten Seitenfläche des Dichtflansches einen radial nach außen konisch sich öffnenden Wandabschnitt 10 auf, an den eine umlaufende, ebene und in der Seitenfläche liegende Ringfläche 9 anschließt. Sie hat über den größten Teil ihres Umfanges vorteilhaft gleiche radiale Breite und ist im Sensorbereich 23 sowie im Fußbereich 24 des Dichtflansches verbreitert ausgebildet.

Die Ringfläche 9 kann in Abhängigkeit von der Form und/oder Ausbildung des Dichtflansches auch eine andere Gestaltung aufweisen. Die dargestellte und beschriebene Form der Ringfläche 9 ist darum nicht einschränkend zu verstehen.

Der Dichtflansch ist mit einem Drehzahl- und Positionssensor 12 (nachfolgend Sensor bezeichnet) versehen, der für die Motorsteuerung dient und mit einem auf der Kurbelwelle drehfest sitzenden Geberrad in bekannter Weise zusammenwirkt. Der Sensor 12 besteht im Wesentlichen aus einer elektronischen Baugruppe 13, die in den Dichtflansch integriert ist. Beim Spritzgießen des Dichtflansches wird die elektronische Baugruppe 13 zunächst in das Spritzgusswerkzeug eingelegt und anschließend beim Spritzgießvorgang mit dem Kunststoff umspritzt. Im Spritzgusswerkzeug werden entsprechende Positionierhilfen für die elektronische Baugruppe 13 angeordnet, so dass diese positionsgenau im spritzgegossenen Dichtflansch angeordnet ist.

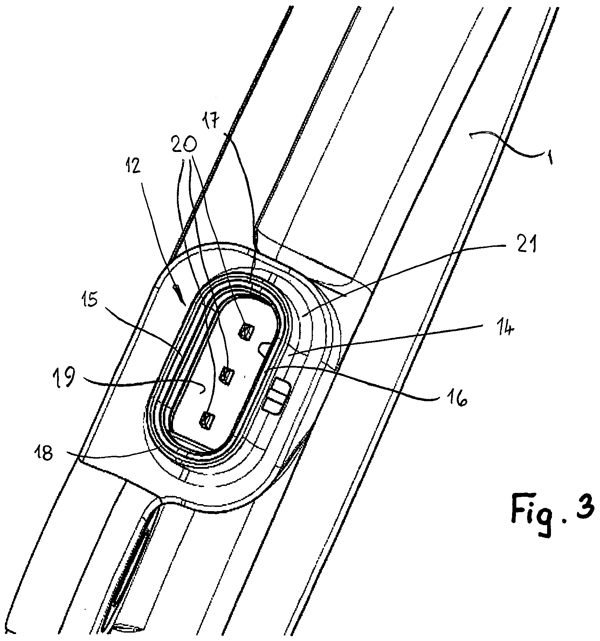

Der Sensor 12 hat einen quer vom Träger 1 abstehenden Buchsenteil 14, in den ein Stecker einer entsprechenden Sensorleitung gesteckt werden kann. Auch dieser Buchsenteil 14 wird beim Spritzgießen des Dichtflansches hergestellt, so dass er nicht gesondert am Träger 1 des Dichtflansches montiert werden muss. Im Ausführungsbeispiel hat der Buchsenteil 14 parallel zueinander liegende gerade Wandabschnitte 15, 16 (Fig. 3), die an ihren Enden über gekrümmte Wandabschnitte 17, 18 ineinander übergehen.

Der Aufnahmeteil 14 hat einen Boden 19, aus dem Kontakte 20 ragen, die mit der elektronischen Baugruppe 13 leitungsverbunden sind und die mit entsprechenden Gegenkontakten des in den Buchsenteil 14 zu steckenden Steckers der Sensorleitung zusammenwirken.

Der Sensor 12 ist so am ringförmigen Träger 1 angeordnet, dass er sich im Bereich neben der dynamischen Dichtung 11 befindet. Dadurch kann der Sensor 12 zuverlässig mit dem Geberrad der Kurbelwelle zusammenwirken.

Die Form des Buchsenteils 14 richtet sich nach den Einbauverhältnissen im Fahrzeug. Im dargestellten Ausführungsbeispiel erstreckt sich der Buchsenteil 14 gerade. Er kann beispielsweise über seine Länge auch gekrümmt, z-förmig gestaltet oder in anderer Weise geformt sein, je nach den vorhandenen Einbauverhältnissen im Fahrzeug.

Der Buchsenteil 14 steht von einem Grundkörper 21 ab, der im dargestellten Ausführungsbeispiel größeren Querschnitt hat als der Buchsenteil 14. Der Grundkörper 21 erstreckt sich etwa über die gesamte axiale Breite des Trägers 1. Die elektronische Baugruppe 13 befindet sich im Bereich dieses Grundkörpers 21, der ebenfalls quer vom ringförmigen Träger 1 absteht und einstückig mit ihm ausgebildet ist. Aufgrund der großen Querschnittsbreite des Grundkörpers 21 ist die elektronische Baugruppe 13 zuverlässig geschützt. Da die elektronische Baugruppe 13 beim Spritzgießvorgang in den Träger 1 des Dichtflansches eingegossen wird, ergibt sich eine hervorragende radiale, tangentiale und axiale Positionierung der Baugruppe 13. Da sie in das Material des Dichtflansches eingebettet ist, ist sie gegen Schwingungen und Erschütterungen unempfindlich. Dies trägt zur hohen Messgenauigkeit des Sensors 12 bei.

Der Buchsenteil 14 und der Grundkörper 21 können auch gleichen oder im Wesentlichen gleichen Querschnitt haben. Auch in einem solchen Fall ist die Baugruppe 13 zuverlässig geschützt.

Da der Sensor 12 nicht als gesonderte Baueinheit nachträglich am Dichtflansch bzw. seinem Träger 1 montiert werden muss, sind keine Führungen für den Sensor erforderlich, die zu Unterbrechungen im Wandabschnitt 10 und in der Ringfläche 9 führen würden. Aufgrund der geschlossenen Flächen 9, 10 können sich keine Ablagerungen in Hohlräumen und dgl. bilden, wie sie bei herkömmlichen Dichtflanschen auftreten, bei denen der Sensor 12 an den Träger 1 angeschraubt wird. Umgekehrt wird durch die geschlossenen Flächen 9, 10 sichergestellt, dass keine Schmutzteilchen von außen in den Innenbereich des Dichtflansches eingezogen werden.

Diese geschlossenen Flächen 9, 10 sind insbesondere bei der Dichtheitsprüfung des Dichtflansches mit Hilfe einer Überdruckglocke von Vorteil. Mit der Überdruckglocke wird die Dichtheit des Dichtflansches überprüft. Sie wird an eine Stirnseite des Dichtflansches so angesetzt, dass sie über ihren Umfang dichtend sowohl an der Ringfläche 9 als auch am Wandabschnitt 10 des Trägers 1 anliegen kann. Wird nun über die Überdruckglocke ein Überdruck aufgebracht, dann muss der Überdruck über eine vorgegebene Zeit aufrecht erhalten bleiben. Ist dies der Fall, dann ist dies ein Hinweis auf die Dichtheit des Dichtflansches. Sinkt jedoch der Überdruck innerhalb der vorgegebenen Messzeit, deutet dies darauf hin, dass der Dichtflansch Undichtigkeiten aufweist. Da die Flächen 9, 10 geschlossen sind, kann die Dichtheitsprüfung einfach und zuverlässig vorgenommen werden. Tritt ein Druckabfall innerhalb der vorgegebenen Messzeit auf, kann mit Sicherheit davon ausgegangen werden, dass der Dichtflansch undicht ist. Mit der beschriebenen Ausbildung des Dichtflansches kann das Luftleckageaufkommen sehr präzise gemessen werden. Es ist dadurch sogar in vorteilhafter Weise möglich, auf eine Beölung der Kurbelwelle bei der Montage des Dichtflansches zu verzichten, was bei den herkömmlichen Dichtflanschen mit angeschraubtem Sensor erforderlich ist.

Da die elektronische Baugruppe 13 in den Träger 1 des Dichtflansches integriert ist, ergeben sich sehr präzise Ergebnisse bei der Drehzahl- und Positionsmessung der Kurbelwelle. Dies ist darauf zurückzuführen, dass die mit angeschraubten Sensoren verbundenen Probleme eines Dichtflansches infolge des integrierten Sensors 12 vermieden werden. Es entfallen vor allem Montage- und Fertigungstoleranzen, die zu ungenauen Positionen des Sensors in Bezug auf das Geberrad der Kurbelwelle führen. Die Lage der Sensormimik in Bezug auf das Geberrad innerhalb des Dichtflansches ist infolge der Einbettung in das Material des Dichtflansches sehr präzise sowie schwingungs- und erschütterungsunempfindlich.

Durch den Wegfall des separaten Sensors und die Integration der elektronischen Baugruppe 13 in den Träger 1 bzw. den Dichtflansch reduziert sich nicht nur das Gesamtgewicht des Dichtflansches 12, sondern es entfallen auch zusätzliche Montagevorgänge, um den Sensor mit dem Dichtflansch zu verbinden. Damit entfallen aber auch die bisher notwendigen Verbindungselemente, wie Schraube, Zentrierbuchse und Gewindeeinsatz aus Metall. Durch den Wegfall dieser zusätzlichen Teile ergibt sich eine sehr kostengünstige Herstellung des Dichtflansches. Da die genannten Verbindungselemente aus Metall bestehen, werden infolge der Einbettung der elektronischen Baugruppe 13 in den Dichtflansch Ressourcen geschont. Auch wird Kunststoff eingespart, weil für den Sensor keine eigene Haltevorrichtung erforderlich ist. Der Wegfall des gesondert am Dichtflansch zu montierenden Sensors führt auch zu einer erheblichen Kompaktheit des Dichtflansches. Er nimmt dadurch nur wenig Bauraum in Anspruch und kann darum in solchen Fahrzeugen vorteilhaft eingesetzt werden, bei denen nur wenig Bauraum für den Dichtflansch zur Verfügung steht. Zudem zeichnet sich der Dichtflansch durch ein geringes Gewicht aus, weil die zusätzlichen, zur Befestigung des Sensors bislang erforderlichen Verbindungselemente, die aus Metall bestehen, weggefallen sind.

Der Dichtflansch mit spritzgusstechnisch integriertem Sensor 12 kann in jeder geeigneten Größe gefertigt werden. Auch die Positionierung des Sensors 12 am Dichtflansch kann beliebig sein, so dass unterschiedlichste Dichtflansche für unterschiedlichste Motorgestaltungen verwendet werden können. Die Baugruppe 13 muss lediglich innerhalb des Spritzgusswerkzeuges an der richtigen Stelle positioniert werden. Beim anschließenden Spritzgussvorgang befindet sich dann der Sensor 12 an der richtigen Stelle des Dichtflansches.

Im beschriebenen Ausführungsbeispiel ist der Sensor 12 so ausgebildet, dass die Sensorsignale über Leitungen an die Motorsteuerung gesendet werden. Die Signalübertragung kann aber auch drahtlos erfolgen, beispielsweise über Funk.

## Patentansprüche

1. Kurbelwellen-Dichtflansch mit einem Träger (1), der wenigstens teilweise aus Kunststoff besteht und wenigstens eine dynamische Dichtung (11) aufweist, die über den Umfang einer Innenwand eines Durchganges (22) des Trägers (1) verläuft, und mit wenigstens einem zur Erfassung der Drehzahl und der Position der Kurbelwelle vorgesehenen Sensor (12), der im Wesentlichen aus einer elektronischen Baugruppe (13) besteht, **dadurch gekennzeichnet, dass** der Träger (1) vollständig aus dem Kunststoff im Spritzgießverfahren hergestellt ist, und dass die elektronische Baugruppe (13) des Sensors (12) beim Spritzgießen des Dichtflansches in den Kunststoff des Trägers (1) integriert ist.

2. Dichtflansch nach Anspruch 1,
**dadurch gekennzeichnet, dass** der Durchgang (22) einen umlaufenden geschlossenen Wandabschnitt (10) aufweist, an den eine umlaufende, ebene Ringfläche (9) in der einen Seitenfläche des Trägers (1) anschließt.

3. Dichtflansch nach Anspruch 1 oder 2,
**dadurch gekennzeichnet, dass** die elektronische Baugruppe (13) innerhalb des Trägers (1) einen solchen Abstand von der Innenwand des Durchganges (22) des Trägers (1) hat, dass der Sensor (12) mit einem Geberrad auf der Kurbelwelle zusammenwirken kann.

4. Dichtflansch nach einem der Ansprüche 1 bis 3,
**dadurch gekennzeichnet, dass** der Sensor (12) einen vom Träger (1) abstehenden Buchsenteil (14) für einen Stecker einer Sensorleitung aufweist.

5. Dichtflansch nach Anspruch 4,
**dadurch gekennzeichnet, dass** die elektronische Baugruppe (13) bis in einen Grundkörper (21) ragt, von dem der Buchsenteil (14) absteht.

6. Dichtflansch nach Anspruch 5,
**dadurch gekennzeichnet, dass** der Grundkörper (21) sich zumindest annähernd über die axiale Breite des Trägers (1) erstreckt.

7. Dichtflansch nach einem der Ansprüche 1 bis 6,
**dadurch gekennzeichnet, dass** der Träger (1) an einer seiner Seitenflächen wenigstens eine statische Dichtung aufweist.

8. Dichtflansch nach einem der Ansprüche 1 bis 7,
**dadurch gekennzeichnet, dass** der Träger (1) aus Hochleistungs-Thermoplasten oder aus Duroplasten besteht.

9. Dichtflansch nach einem der Ansprüche 1 bis 8,
**dadurch gekennzeichnet, dass** der Sensor (12) über Leitungen oder kabellos die Sensorsignale an eine Steuerung, vorzugsweise eine Motorsteuerung, sendet.

## Claims

1. A crank shaft seal flange with a carrier (1), which is at least partially made of plastic and has at least one dynamic seal (11), which runs across the circumference of the inner wall of a passage (22) of the carrier (1), and with at least one sensor (12) provided for detecting the rotational speed and the position of the crank shaft, said sensor (12) essentially being composed of one electronic assembly (13),
**characterized in that** the carrier (1) is fully made of plastic using a mould injection process, and that the electronic assembly (13) of the sensor (12) is integrated into the plastic of the carrier (1) during the mould injection of the seal flange.

2. Seal flange according to claim 1,
**characterized in that** the passage (22) has a circumferential closed wall section (10) to which a circumferential flat annular surface (9) adjoins in the lateral surface of the carrier (1).

3. Seal flange according to claim 1 or 2,
**characterized in that**, within the carrier (1), the electronic assembly (13) has such a spacing from the inner wall of the passage (22) of the carrier (1) to the extent that the sensor (12) can interact with a sensor wheel on the crank shaft.

4. Seal flange according to one of the claims 1 to 3, **characterized in that** the sensor (12) comprises a socket part (14) projecting from the carrier (1) for a plug belonging to a sensor line.

5. Seal flange according to claim 4,
**characterized in that** the electronic assembly (13) projects into a main body (21), from which the socket part (14) protrudes.

6. Seal flange according to claim 5,
**characterized in that** the main body (21) extends at least approximately across the axial width of the carrier (1).

7. Seal flange according to one of the claims 1 to 6, **characterized in that** the carrier (1) has at least one static seal on one of its lateral surfaces.

8. Seal flange according to one of the claims 1 to 7, **characterized in that** the carrier (1) is made of high -performance thermoplastics or of thermosetting plastics.

9. Seal flange according to one of the claims 1 to 8, **characterized in that** the sensor (12) sends the sensor signals to a control system, preferably a motor control system, via cables or wirelessly.

## Revendications

1. Bride étanche de vilebrequins, pourvue d'un support (1), qui est constituée au moins partiellement en matière plastique et qui comporte au moins un joint dynamique (11) qui s'écoule sur la périphérie d'une paroi intérieure d'un passage (22) du support (1) et pourvue d'au moins un capteur (12) prévu pour détecter la vitesse de rotation et la position du vilebrequin, qui est sensiblement constitué d'un ensemble électronique (13),
**caractérisée en ce que** le support (1) est entièrement fabriqué dans la matière plastique par procédé de moulage par injection et **en ce que** lors du moulage par injection de la bride étanche,
l'ensemble électronique (13) du capteur (12) est intégré dans la matière plastique du support (1).

2. Bride étanche selon la revendication 1,
**caractérisée en ce que** le passage (22) comporte un segment de paroi (10) périphérique fermé, sur lequel une surface annulaire (9) périphérique plane se raccorde dans l'une surface latérale du support (1).

3. Bride étanche selon la revendication 1 ou 2,
**caractérisée en ce que** l'ensemble électronique (13) présente à l'intérieur du support (1) un écart tel par rapport à la paroi intérieure du passage (22) du support (1) que le capteur (12) puisse coopérer avec une roue phonique sur le vilebrequin.

4. Bride étanche selon l'une quelconque des revendications 1 à 3,
**caractérisée en ce que** le capteur (12) comporte un raccord femelle (14) débordant du support (1) pour un connecteur d'une ligne du capteur.

5. Bride étanche selon la revendication 4,
**caractérisée en ce que** l'ensemble électronique (13) saillit dans un corps de base (21) duquel le raccord femelle (14) déborde.

6. Bride étanche selon la revendication 5,
**caractérisée en ce que** le corps de base (21) s'étend approximativement sur la largeur axiale du support (1).

7. Bride étanche selon l'une quelconque des revendications 1 à 6,
**caractérisée en ce que** sur l'une de ses surfaces latérales, le support (1) comporte un joint statique.

8. Bride étanche selon l'une quelconque des revendications 1 à 7,
**caractérisée en ce que** le support (1) est constitué de matières thermoplastiques hautes performances ou de matières plastiques thermodurcissables.

9. Bride étanche selon l'une quelconque des revendications 1 à 8,
**caractérisée en ce que** le capteur (12) envoie de manière filaire ou sans fil les signaux du capteur à un système de commande, de préférence un système de commande du moteur.
